# EUROPÄISCHE PATENTSCHRIFT

(11) **EP 4 290 195 B1**
(45) Veröffentlichungstag und Bekanntmachung des Hinweises auf die Patenterteilung: **09.07.2025**
(21) Anmeldenummer: 23175940.8
(22) Anmeldetag: 30.05.2023
(51) Int. Cl.: G01G 19/04, G01G 23/01

(54) **VERFAHREN UND SYSTEM ZUM KALIBRIEREN EINER GLEISWAAGE**
METHOD AND SYSTEM FOR CALIBRATING A RAILWAY SCALE
PROCÉDÉ ET SYSTÈME D'ÉTALONNAGE D'UNE BALANCE DE VOIE

(30) Priorität: 10.06.2022 AT 504092022
(43) Veröffentlichungstag der Anmeldung: 13.12.2023
(73) Patentinhaber: Plasser & Theurer Export von Bahnbaumaschinen Gesellschaft m.b.H., 1010 Wien (AT)
(72) Erfinder: HASSLACHER, Alexander, 4060 Leonding (AT)

(56) Entgegenhaltungen:
- CN-Y- 201 255 659
- US-A- 3 785 297
- US-A1- 2017 268 180

## Beschreibung

### Technisches Gebiet

Die Erfindung betrifft ein Verfahren zum Kalibrieren einer Gleiswaage mittels einer auf einem Gleis verfahrbaren Gleisbaumaschine, die Arbeitsaggregate zum Bearbeiten des Gleises und/oder eines Schotterbettes umfasst, wobei zumindest ein Arbeitsaggregat zumindest eine durch einen Antrieb absenkbare und anhebbare Krafteinleitungsstelle aufweist, wobei der Antrieb und damit die Bewegung der Krafteinleitungsstelle mittels eines eingerichteten Steuer- und Regelungssystems kraft- oder weggeregelt erfolgt. Zudem betrifft die Erfindung ein System zur Durchführung des Verfahrens.

### Stand der Technik

Zur Feststellung des Gewichtes von Schienenfahrzeugen, Wagen, Waggons, Zügen oder Lokomotiven, insbesondere von Rad- und Achslasten bzw. Achs- oder Drehgestellgewichten werden Gleiswaagen eingesetzt. Neben unterschiedlichen Bauarten, sind dabei in erster Linien zwei Hauptgruppen zu unterscheiden: statische Gleiswaagen und dynamische Gleiswaagen.

Mit statischen Gleiswaagen erfolgt das Wägen von stillstehenden Schienenfahrzeugen. Dabei werden beide Schienenstränge über einen definierten Abschnitt unterbrochen, dieser Gleisabschnitt mit einer definierten Länge als Waage adaptiert und genutzt. Auf diesem Abschnitt stehende Schienenfahrzeuge bzw. Achsen oder Drehgestelle können entsprechend verwogen werden. Statische Gleiswagen kommen überwiegend bei Herstellern von Schienenfahrzeugen für Zulassungsverfahren, wie auch bei Werkstätten, Wartungs- und Inspektionsbetrieben zum Einsatz.

Bei dynamischen Gleiswaagen erfolgt der Wiegevorgang in Bewegung während der Überfahrt, ohne einzelne Wagen bzw. Waggons im Schienengüterverkehr anhalten zu müssen. Ein im Gleis integriertes System, beispielsweise an einer Schienenschwelle, erfasst das Gewicht des überfahrenden Waggons. Das Wiegen kann bei üblichen Anlagen mit einer maximalen Überfahrtgeschwindigkeit von derzeit circa 15 km/h erfolgen. Gleiswaagen müssen in regelmäßigen Intervallen geprüft, kalibriert bzw. geeicht werden. Durch das Eichen wird der gesetzlich vorgeschriebenen Prüfung von Messgeräten entsprechend den Vorgaben des Maß- und Eichgesetzes des jeweiligen Landes nachgekommen. In Österreich und Deutschland ist dies beispielsweise alle 1 bis 4 Jahre erforderlich. Abhängig ist das Intervall von Art, Anwendung und Gewichtsklasse der Waage. Dazu werden spezielle Kalibriergewichte, auch Referenzgewichte genannt, auf der zu kalibrierenden Waage platziert und der damit gemessene Wert mit dem Referenzgewicht verglichen. Aus Abweichungen zum Soll-Referenzgewicht werden in weiterer Folge Kalibrierparameter für die Waage bestimmt.

Die Anforderungen an einen Kalibrier-/Eichvorgang in der Gewichtsklasse für Schienenfahrzeuge bringen einen hohen Aufwand mit sich. Entsprechend hohe Kosten für Maschinen- und Personaleinsatz, vor allem aber auch eine entsprechend lange Zeitspanne mit nicht verwendbarer Gleiswaage sind die Folge. Es müssen für das Prozedere unzählige Tonnen Referenzgewichte antransportiert und mit schwerem Gerät, wie etwa einem Mobilkran/Autokran, verhoben werden.

Die Patentschrift US 3 785 297 A offenbart ein Verfahren und System zum Kalibrieren einer Gleiswaage mittels eines auf einem Gleis verfahrbaren Gleisfahrzeugs. Das System weist eine durch einen Antrieb absenkbare und anhebbare Krafteinleitungsstelle mit Kraftsensoren für die Kalibrierung auf. Das Gleisfahrzeug weist keine Arbeitsaggregate einer Gleisbaumaschine auf.

### Darstellung der Erfindung

Der Erfindung liegt die Aufgabe zugrunde, für ein Verfahren der eingangs genannten Art eine dahingehende Verbesserung gegenüber dem Stand der Technik anzugeben, dass der Kalibrier-/Eichvorgang mit kürzerem Zeitaufwand bei geringerem Maschinen- und Personaleinsatz durchführbar ist. Dabei soll die Qualität und Präzision der Kalibrierung/Eichung den gesetzlichen Auflagen der Behörden und/oder den Vorgaben des Betreibers entsprechen. Weiters ist es Aufgabe der Erfindung, ein entsprechendes System zur Durchführung es Verfahrens anzugeben.

Erfindungsgemäß werden diese Aufgaben gelöst durch ein Verfahren mit den Merkmalen des unabhängigen Anspruchs 1 und ein System gemäß den Merkmalen des unabhängigen Anspruchs 5. Abhängige Ansprüche geben vorteilhafte Ausgestaltungen der Erfindung an.

Die Erfindung sieht vor, dass vor Beginn eines Kalibriervorgangs die Gleisbaumaschine auf dem Gleis dahingehend positioniert wird, dass die zumindest eine Krafteinleitungsstelle eine Position lotrecht über dem Bereich der zu kalibrierenden Gleiswaage einnimmt, dass an zumindest der einen Krafteinleitungsstelle eine Messeinheit angebracht wird, dass die Messeinheit mit der Gleiswaage an einem der Gleiswaage zugehörigen Gleisstück/Auflagepunkt gekoppelt wird, dass mit Beginn des Kalibriervorgangs zumindest die eine Krafteinleitungsstelle abgesenkt wird und durch diese Absenkung eine definierte Kraft auf die Gleiswaage aufgebracht wird. Auf diese Weise ist für einen Kalibriervorgang ein Einsatz und die Herbeischaffung von schwerem Gerät, beispielsweise einem Mobilkran/Autokran oder Raupenkran, nicht mehr erforderlich. Zudem ist die Beschaffung und das Handling von tonnenschweren Referenzgewichten hinfällig. Eine sich in naher Umgebung befindliche Gleisbaumaschine kann einfach und direkt auf dem Gleis an die Stelle der zu kalibrierenden Gleiswaage verfahren werden.

Eine Ausprägung der Erfindung sieht zudem vor, dass die Absenkung der Krafteinleitungsstelle und dadurch die Erhöhung der Kraft auf die Gleiswaage schrittweise oder kontinuierlich erfolgt. Durch die schrittweise oder kontinuierliche Erhöhung der Kraft/Last auf die Gleiswaage können unterschiedlichste Anforderungen an die Prüfabläufe gemäß Prüfvorschriften der Eich-/Kalibrierregelwerke erfüllt werden. Die Kraft-/Lasteinleitung ist auch in Hinblick auf die zeitlichen Abläufe, sowie Abfolgen und Geschwindigkeitsvorgaben des Vorgangs einstellbar.

Auch ist es von Vorteil, dass sowohl die Absenkung der Krafteinleitungsstelle als auch die Kraft auf die Gleiswaage durch ein Sensor-/Messsystem als Weg- und Kraftsignal erfasst und an das Steuer- und Regelungssystem übergeben werden, dass dieses Weg- und Kraftsignal zur Steuerung, Regelung und Überwachung des Kalibriervorgangs ausgewertet wird, dass das Ergebnis dieser Auswertung mit im Steuer- und Regelungssystem hinterlegten oder vor Beginn des Kalibriervorgangs von einem Maschinenbediener eingegebenen Start-, End- und/oder Grenzwerten verglichen wird und dass dieses Weg- und Kraftsignal bzw. zugehörige Datenwerte in einem Speicher, insbesondere einer Datenbank, abgelegt werden. Somit können sämtliche Vorgänge sowie definierte Parameter des Kalibriervorgangs auf einfache Weise aufgezeichnet und dokumentiert werden. Zudem sorgt die Aufzeichnung und Überwachung des Weg- und Kraftsignals für eine präzise Kalibrierung der Gleiswaage sowie eine Erfüllung der Vorgaben der Eich-/Kalibrierregelwerke.

In einer Ausgestaltung ist vorgesehen, dass das Weg- und Kraftsignal in einer Anzeigevorrichtung in Textform oder grafisch aufbereitet als Graph angezeigt wird und dass die Anzeigevorrichtung in einer Bedienerkabine angeordnet ist. Dadurch wird dem Bediener ein besonders komfortables Betrachten und auch manuelles Überwachen ermöglicht.

Beim erfindungsgemäßen System zur Durchführung eines der angegebenen Verfahren ist vorgesehen, dass an wenigstens einer Krafteinleitungsstelle eine Messeinheit anbringbar ist, dass die Messeinheit mit einer Gleiswaage an einem einer Gleiswaage jeweils zuordbaren Gleisstück/Auflagepunkt koppelbar ist. Dadurch ist die Gleisbaumaschine in kürzest möglicher Zeit mit geringem Aufwand adaptiert und zur Durchführung eines Kalibrierungs- /Eichvorgangs eingerichtet.

Eine Weiterbildung des Systems sieht vor, dass die Gleisbaumaschine einen auf Schienenfahrwerken verfahrbaren Satellitenrahmen umfasst, dass dieser gegenüber dem Maschinenrahmen in Verlaufsrichtung des Gleises bewegbar ist und dass zumindest ein Arbeitsaggregat auf dem Satellitenrahmen angeordnet ist. Diese ermöglicht auch das Heranziehen von kontinuierlich arbeitenden Stopfmaschinen zum Kalibrieren einer Gleiswaage.

Vorteilhaft ist, dass die zumindest eine Krafteinleitungsstelle zum Kalibrieren der Gleiswaage als Bohrung, Zurrauge, Schraubanschluss, oder zu den genannten als mechanisch und funktionell vergleichbarer Einleitepunkt bzw. Anschlusspunkt für Zug- und Druckkräfte ausgeführt ist. Damit ist eine Messeinheit mechanisch besonders rasch und sicher installierbar.

Eine Ausprägung sieht vor, dass die zumindest eine Krafteinleitungsstelle an einem Hebe-/Richtaggregat eingerichtet ist.

Bei einem Hebe-/Richtaggregat kann der vorhandene, zugehörige Antrieb für die Positionierung des Hebe-/Richtaggregats aufgrund dessen Lage und Bauform besonders vorteilhaft für die Lasteinleitung in das Gleis herangezogen werden.

In einer weiteren Ausprägung ist vorgesehen, dass die zumindest eine Krafteinleitungsstelle an einer Schotterverteilvorrichtung eingerichtet ist. Aufgrund der Bauweise von Schotterverteilvorrichtungen - auch als Schotterpflug bezeichnet und zur Bearbeitung und Verteilung von überschüssigem Gleisschotter eingesetzt - und der Anordnung der zugehörigen Antriebe zum Heben und Senken, sind diese Vorrichtungen gut für die Adaptierung mit einer Messeinheit und damit eine Lasteinleitung in das Gleis einsetzbar.

Es ist vorteilhaft, dass die Messeinheit als Kraftmessdose ausgeführt ist. Kraftmessdosen sind bewährte, präzise Industriesensoren zum Erfassen und Messen von Kräften. Diese Kraftsensoren werden als kompakte Einheit in einem robusten Gehäuse gefertigt und sind dadurch besonders gut für die Anbringung an einer Krafteinleitungsstelle an einer Gleisbaumaschine geeignet.

Zudem ist es sinnvoll, dass die Messeinheit zweifach ausgeführt ist und je eine Messeinheit jeweils einem der beiden Schienenstränge zugeordnet ist. Auf diese Weise ist eine gleichmäßige Lasteinleitung in beide Schienenstränge möglich, wodurch die Gleiswaage in Bezug auf die Gleismittelachse nahezu symmetrisch belastbar ist. Je nach Type und Ausführung der Gleiswaage ist durch diese Form der Belastung ein rascher und präziser Kalibriervorgang umsetzbar.

Des Weiteren ist es von Vorteil, dass die Messeinheit einen Druckkraftaufnehmer oder einen kombinierten Zug-/Druckkraftaufnehmer umfasst. Dadurch wird ein flexibler Einsatz der Messeinheit sichergestellt. Diese ist nicht nur zwischen Krafteinleitungsstelle und Gleis bzw. Gleisstrang zur Aufnahme von Druckkräften anbringbar, sondern auch derart an Antriebe von zugehörigen Arbeitsaggregaten koppelbar, dass Zugkräfte aufnehmbar sind.

Eine Weiterbildung sieht vor, dass die Messeinheit mit dem Steuer- und Regelungssystem und/oder mit dem Sensor-/Messsystem gekoppelt ist und dass das Steuer- und Regelungssystem zur Auswertung und Speicherung des Weg- und Kraftsignals der Krafteinleitungsstelle eingerichtet ist. Damit ist ein Austausch von Information und Messdaten für die Vorbereitung und Durchführung eines fachgerechten, sicheren und präzisen Kalibriervorgangs sichergestellt.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Gleisbaumaschine in Seitenansicht mit üblichen Arbeitsaggregaten während einer Gleisbearbeitung
- Fig. 2: Gleisbaumaschine aus Fig. 1 in Seitenansicht mit üblichen Arbeitsaggregaten mit Messeinheit in Arbeitsstellung zur Kalibrierung einer Gleiswaage

### Beschreibung der Ausführungsformen

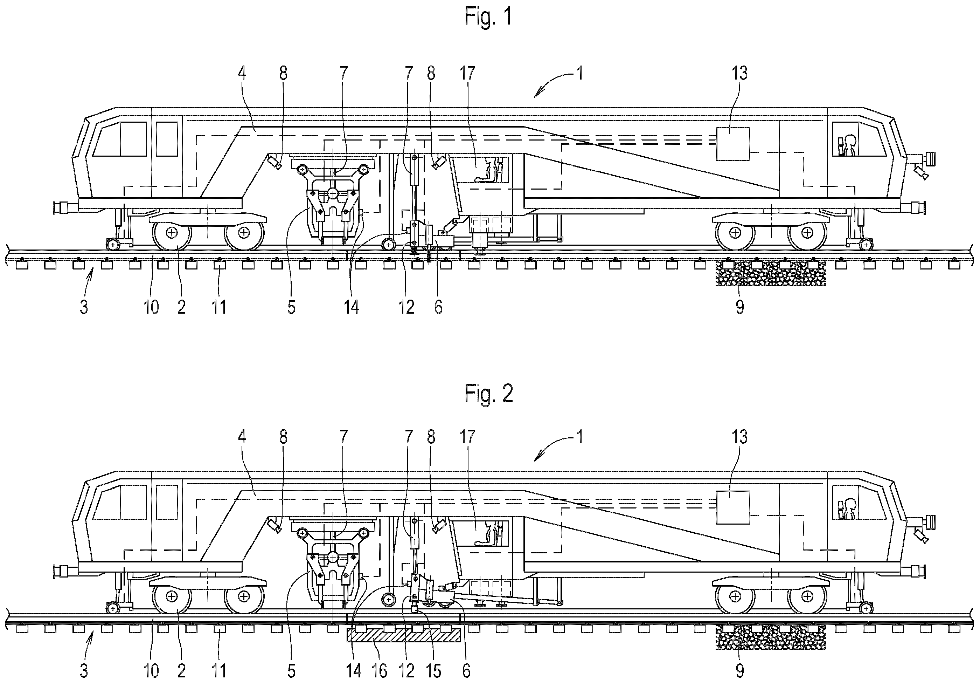

Die in Fig. 1 und Fig. 2 schematisch dargestellte Gleisbaumaschine 1 ist eine Stopfmaschine, die in zwei unterschiedlichen Arbeitsstellungen dargestellt ist. Die Gleisbaumaschine 1 ist mit eigenem Antrieb mittels Schienenfahrwerken 2 auf Schienensträngen 10 entlang eines Gleises 3 verfahrbar. In einem Schotterbett 9 gelagerte Schwellen 11 bilden mit den darauf befestigten Schienensträngen 10 das Gleis 3. Die Gleisbaumaschine 1 umfasst ein Stopfaggregat 5 zum Unterstopfen und Verdichten des Schotterbettes 9, sowie ein Hebe-/Richtaggregat 6. Letzteres ist vorteilhafterweise zum vertikalen Heben, wie auch zum seitlichen Richten des Gleises 3 vorgesehen. Fig. 1 zeigt die Maschine 1 in Arbeitsstellung zur Durcharbeitung des Gleises 3, dabei ist das Hebe-/Richtaggregat 6 auf die Schienenstränge 10 abgesenkt, das Stopfaggregat 5 ist in Ausgangsstellung mit angehobenen Stopfpickeln dargestellt.

Die genannten Arbeitsaggregate 5 und 6 sind auf einem Maschinenrahmen 4 angeordnet, der über die Schienenfahrwerke 2 gelagert und entlang des Gleises 3 verfahrbar ist. In einer nicht dargestellten Variante der Gleisbaumaschine 1 sind Arbeitsaggregate auf einem Satellitenrahmen angeordnet. Der Satellitenrahmen ist an einem Rahmenende auf einem Schienenfahrwerk gelagert, das andere Rahmenende des Satellitenrahmens ist auf dem Maschinenrahmen 4 beweglich gelagert. Der Satellitenrahmen ist dadurch relativ gegenüber dem Maschinenrahmen 4 entlang des Gleises 3 verschiebbar. Das Hebe-/Richtaggregat 6 ist in Fig. 1 über einen Antrieb 7 gegenüber dem Maschinenrahmen 4 bzw. Satellitenrahmen anheb- und absenkbar. Auf diese Weise sind mittels Antrieb 7 sowohl Zug-, als auch Druckkräfte in das Gleis 3 einleitbar.

An beiden Enden der Gleisbaumaschine 1 ist je eine Fahrerkabine angeordnet, die einen Führerstand umfasst. In unmittelbarer Nähe zu den Arbeitsaggregaten 5, 6 ist auf dem Maschinenrahmen 4 eine Bedienerkabine 17 installiert. Dabei ist für einen Bediener während der Gleisbauarbeiten eine gute Sicht auf sämtliche in diesem Bereich angeordneten Arbeitsaggregate gewährleistet. Zusätzlich ist ein Videosystem mit Kameras 8 eingerichtet, um den Bediener im Arbeitseinsatz zu unterstützen und nicht optimal einsehbare Arbeitsvorgänge an der Maschine 1 auf entsprechende Anzeigeeinrichtungen zu übertragen. In einer anderen Ausstattungsvariante der Maschine 1 sind die Fahrerkabine und die Bedienerkabine 17 als eine gemeinsame Einheit ausgeführt, wobei die Bedienung und Steuerung der Arbeitsvorgänge über einen Bedienstand mit entsprechenden Instrumenten und Anzeigeeinrichtungen erfolgt. Für ein Erfassen der jeweiligen Bewegungs- und Lagezustände der Arbeitsaggregate 5, 6 ist ein Sensor-/Messsystem 14 eingerichtet. Dieses umfasst eine präzise Anordnung an Sensorik und Messtechnik an den Arbeitsaggregaten 5, 6 und dem Maschinenrahmen 4. Das Sensor-/Messsystem 14 ist mit einem Steuer- und Regelungssystem 13 gekoppelt.

Fig. 2 zeigt die Maschine 1 in Arbeitsstellung zur Kalibrierung einer Gleiswaage 16. Die Gleiswaage 16 ist in das Gleis 3 und auch Schotterbett 9 integriert. Eine Messeinheit 15 ist an einer Krafteinleitungsstelle 12 form- oder kraftschlüssig an dem Hebe-/Richtaggregat 6 angebracht. In anderen Ausführungen der Maschine 1 kann eine Krafteinleitungsstelle auch an anderen Arbeitsaggregaten oder Vorrichtungen eingerichtet sein.

Die Messeinheit 15 ist auf die oben dargelegte Weise über das Hebe-/Richtaggregat 6 mit dem Antrieb 7 gekoppelt. Zudem ist die Messeinheit 15 im Bereich der Gleiswaage 16 mittels eines der Messeinheit 15 zugehörigen Kontaktelementes auf einen der beiden Schienenstränge 10, oder auch auf beide Schienenstränge 10, angestellt. Hierbei können auch zwei oder mehr Messeinheiten 15 eingesetzt werden, beispielsweise jeweils eine Messeinheit 15 je Schienenstrang 10. Das Kontaktelement kann auch abrollbar und damit entlang des Schienenstrangs 10 annährend reibungsfrei bewegbar ausgestaltet sein.

Die Messeinheit 15 ist als Präzisions-Kraftmessdose - auch als Kraftsensor, Kraftaufnehmer, oder Kraftmesszelle bezeichnet - ausgeführt. Übliche Kraftmessdosen sind beispielsweise nach dem piezoelektrischen Messprinzip oder mit Dehnmessstreifen (DMS) aufgebaut. Je nach Ausführung verfügt eine Kraftmessdose auch über einen integrierten Mess-/ oder Ladungsverstärker. Zudem ist die Messeinheit 15 als Druckkraftaufnehmer zur reinen Aufnahme von Druckkräften ausgeführt, optional auch als kombinierter Zug-/Druckkraftaufnehmer. Dadurch können neben Druckkräften optional auch Zugkräfte erfasst werden.

Für den Kalibriervorgang wird nun anstelle der sonst üblichen, aufwendig herbeigebrachten Referenzgewichte mittels des Antriebs 7 über die Krafteinleitungsstelle 12 und die angebrachte Messeinheit 15 eine definierte Last in das Gleis 3 und damit in die Gleiswaage 16 eingebracht. Je nach Anzahl installierter Messeinheiten 15, wie auch der Ausgestaltung der Krafteinleitungsstelle 12, wird die Last in einen der beiden Schienenstränge 10, oder auch in beide Schienenstränge 10, eingebracht.

Die Messeinheit bzw. die Messeinheiten 15 sind, so wie auch das Sensor-/Messsystem 14, für den Daten- und Informationsaustausch mittels kabelgebundenen und/oder kabellosen Verbindungseinrichtungen mit dem Steuer- und Regelungssystem 13 gekoppelt. Das Steuer- und Regelungssystem 13 ist zur Auswertung und Speicherung des Weg- und Kraftsignals der Krafteinleitungsstelle 12 durch Soft- und Hardware entsprechend eingerichtet. Die genauen Vorgänge und Parameter des Kalibriervorgangs, wie beispielsweise die Überwachung und Aufzeichnung des Weg- und Kraftsignals, werden auf diese Weise entsprechend den Vorgaben des Gesetzgebers bzw. der durchführenden beeideten Stelle, aufgezeichnet und protokolliert.

Zur Durchführung des Kalibriervorgangs sind im Steuer- und Regelungssystem 13 unterschiedliche Betriebsmodi hinterlegt und vom Bediener auswählbar. So kann die Absenkung der Krafteinleitungsstelle 12 und dadurch die Erhöhung der in das Gleis 3 eingeleiteten Kraft schrittweise oder kontinuierlich erfolgen. Analoges gilt für die Rücknahme der eingeleiteten Kraft. Die Abfolge und genaue Definition der Schritte, wie auch die Parameter des kontinuierlichen Modus sind vom Bediener in der Bedienkabine 17 bzw. am Bedienstand mittels entsprechender Bedieninstrumente und/oder Anzeigeeinrichtungen einstellbar.

Im Allgemeinen eignen sich neben Stopfmaschinen auch andere gleisfahrbare Fahrzeuge oder Gleisbaumaschinen mit vergleichbaren Arbeitsaggregaten und/oder Hebeeinrichtungen zur Adaptierung und Ausführung von Kalibriervorgängen.

## Patentansprüche

1. Verfahren zum Kalibrieren einer Gleiswaage (16) mittels einer auf einem Gleis (3) verfahrbaren Gleisbaumaschine (1), die Arbeitsaggregate (5,6) zum Bearbeiten des Gleises (3) und/oder eines Schotterbettes (9) umfasst, wobei zumindest ein Arbeitsaggregat (5,6) zumindest eine durch einen Antrieb (7) absenkbare und anhebbare Krafteinleitungsstelle (12) aufweist, wobei der Antrieb (7) und damit die Bewegung der Krafteinleitungsstelle (12) mittels eines eingerichteten Steuer- und Regelungssystems (13) kraft- oder weggeregelt erfolgt, wobei
vor Beginn eines Kalibriervorgangs die Gleisbaumaschine (1) auf dem Gleis (3) dahingehend positioniert wird, dass die zumindest eine Krafteinleitungsstelle (12) eine Position lotrecht über dem Bereich der zu kalibrierenden Gleiswaage (16) einnimmt, wobei
an zumindest der einen Krafteinleitungsstelle (12) eine Messeinheit (15) angebracht wird, wobei
die Messeinheit (15) mit der Gleiswaage (16) an einem der Gleiswaage (16) zugehörigen Gleisstück/Auflagepunkt gekoppelt wird, wobei
mit Beginn des Kalibriervorgangs zumindest die eine Krafteinleitungsstelle (12) abgesenkt wird und durch diese Absenkung eine definierte Kraft auf die Gleiswaage (16) aufgebracht wird.

2. Verfahren nach Anspruch 1, **dadurch gekennzeichnet, dass** die Absenkung der Krafteinleitungsstelle (12) und dadurch die Erhöhung der Kraft auf die Gleiswaage (16) schrittweise oder kontinuierlich erfolgt.

3. Verfahren nach Anspruch 1 oder 2, **dadurch gekennzeichnet, dass** sowohl die Absenkung der Krafteinleitungsstelle (12) als auch die Kraft auf die Gleiswaage (16) durch ein Sensor-/Messsystem (14) als Weg- und Kraftsignal erfasst und an das Steuer- und Regelungssystem (13) übergeben werden, dass dieses Weg- und Kraftsignal zur Steuerung, Regelung und Überwachung des Kalibriervorgangs ausgewertet wird, dass das Ergebnis dieser Auswertung mit im Steuer- und Regelungssystem (13) hinterlegten oder vor Beginn des Kalibriervorgangs von einem Maschinenbediener eingegebenen Start-, End- und/oder Grenzwerten verglichen wird und dass dieses Weg- und Kraftsignal bzw. zugehörige Datenwerte in einem Speicher, insbesondere einer Datenbank, abgelegt werden.

4. Verfahren nach einem der Ansprüche 1 bis 3, **dadurch gekennzeichnet, dass** das Weg- und Kraftsignal in einer Anzeigevorrichtung in Textform oder grafisch aufbereitet als Graph angezeigt wird und dass die Anzeigevorrichtung in einer Bedienerkabine (19) angeordnet ist.

5. System zur Durchführung eines Verfahrens nach einem der Ansprüche 1 bis 4, umfassend eine Gleisbaumaschine (1), mit einem auf Schienenfahrwerken (2) verfahrbaren Maschinenrahmen (4) und mit wenigstens einem auf dem Maschinenrahmen (4) angebrachten Arbeitsaggregat (5,6), wobei an wenigstens einem Arbeitsaggregat (5,6) wenigstens eine durch einen Antrieb (7) absenkbare und anhebbare Krafteinleitungsstelle (12) eingerichtet ist, wobei ein Antrieb (7) und damit die Bewegung der wenigstens einen Krafteinleitungsstelle (12) mittels eines eingerichteten Steuer- und Regelungssystems (13) kraft- oder wegregelbar ist, weiters umfassend ein Sensor-/Messsystem (14), sowie eine Bedienerkabine (17), wobei an wenigstens einer Krafteinleitungsstelle (12) eine Messeinheit (15) anbringbar ist, wobei die Messeinheit (15) mit einer Gleiswaage (16) an einem einer Gleiswaage (16) jeweils zuordbaren Gleisstück/Auflagepunkt koppelbar ist.

6. System nach Anspruch 5, **dadurch gekennzeichnet, dass** die Gleisbaumaschine (1) einen auf Schienenfahrwerken (2) verfahrbaren Satellitenrahmen umfasst, dass dieser gegenüber dem Maschinenrahmen (4) in Verlaufsrichtung des Gleises (3) bewegbar ist und dass zumindest ein Arbeitsaggregat (5,6) auf dem Satellitenrahmen angeordnet ist.

7. System nach Anspruch 5 oder 6, **dadurch gekennzeichnet, dass** die zumindest eine Krafteinleitungsstelle (12) zum Kalibrieren der Gleiswaage (16) als Bohrung, Zurrauge, Schraubanschluss, oder zu den genannten als mechanisch und funktionell vergleichbarer Einleitepunkt bzw. Anschlusspunkt für Zug- und Druckkräfte ausgeführt ist.

8. System nach einem der Ansprüche 5 bis 7, **dadurch gekennzeichnet, dass** die zumindest eine Krafteinleitungsstelle (12) an einem Hebe-/Richtaggregat (7) eingerichtet ist.

9. System nach einem der Ansprüche 5 bis 8, **dadurch gekennzeichnet, dass** die zumindest eine Krafteinleitungsstelle (12) an einer Schotterverteilvorrichtung eingerichtet ist.

10. System nach einem der Ansprüche 5 bis 9, **dadurch gekennzeichnet, dass** die Messeinheit (15) als Kraftmessdose ausgeführt ist.

11. System nach einem der Ansprüche 5 bis 10, **dadurch gekennzeichnet, dass** die Messeinheit (15) zweifach ausgeführt ist und je eine Messeinheit (15) jeweils einem der beiden Schienenstränge (10) zugeordnet ist.

12. System nach einem der Ansprüche 5 bis 11, **dadurch gekennzeichnet, dass** die Messeinheit (15) einen Druckkraftaufnehmer oder einen kombinierten Zug-/Druckkraftaufnehmer umfasst.

13. System nach einem der Ansprüche 5 bis 12, **dadurch gekennzeichnet, dass** die Messeinheit (15) mit dem Steuer- und Regelungssystem (13) und/oder mit dem Sensor-/Messsystem (14) gekoppelt ist und dass das Steuer- und Regelungssystem (13) zur Auswertung und Speicherung des Weg- und Kraftsignals der Krafteinleitungsstelle (12) eingerichtet ist.

## Claims

1. A method for calibrating a wagon weighbridge (16) by means of a track maintenance machine (1) which can be moved on a track (3) and comprises work units (5, 6) for treating the track (3) and/or a ballast bed (9), with at least one work unit (5, 6) having at least one force introduction point (12) which can be lowered and lifted by a drive (7), with the drive (7) and thus the movement of the force introduction point (12) being force-controlled or displacement-controlled by means of a set-up control and regulation system (13), with the track maintenance machine (1) being positioned on the track (3) prior to the start of a calibration process in such a way that the at least one force introduction point (12) assumes a vertical position above the area of the wagon weighbridge (16) to be calibrated, with a measuring unit (15) being attached to at least the one force introduction point (12), with the measuring unit (15) being coupled with the wagon weighbridge (16) at a track section/support point associated with the wagon weighbridge (16), with at least the one force introduction point (12) being lowered at the start of the calibration process and a defined force being applied to the wagon weighbridge (16) by this lowering.

2. A method according to claim 1, **characterized in that** the lowering of the force introduction point (12) and thus the increase in the force on the wagon weighbridge (16) can be gradual or continuous.

3. A method according to claim 1 or 2, **characterized in that** both the lowering of the force introduction point (12) and the force on the wagon weighbridge (16) are recorded by a sensor/measuring system (14) as a displacement and force signal and transferred to the control and regulation system (13), **in that** this displacement and force signal is analysed to control, regulate, and monitor the calibration process, **in that** the result of this analysis is compared with start, end, and/or limit values stored in the control and regulation system (13), or input by a machine operator prior to the start of the calibration process, and **in that** this displacement and force signal, or associated data values are stored in a memory, in particular a database.

4. A method according to one of the claims 1 to 3, **characterized in that** the displacement and force signal is displayed in a displaying device in text form or graphically prepared as a graph and **in that** the displaying device is arranged in an operator's cab (19).

5. A system for carrying out a method according to one of the claims 1 to 4, comprising a track maintenance machine (1), with a machine frame (4) which can be moved on rail running gears (2) and with at least one work unit (5, 6) attached to the machine frame (4), with at least one force introduction point (12) which can be lowered and lifted by a drive (7) being set up on at least one work unit (5, 6), with a drive (7) and thus the movement of the at least one force introduction point (12) being able to be force-controlled or displacement-controlled by means of a set-up control and regulation system (13), further comprising a sensor/measuring system (14) and an operator's cab (17), with a measuring unit (15) being able to be attached to at least one force introduction point (12), with the measuring unit (15) being able to be coupled with a wagon weighbridge (16) at a track section/support point that can each be assigned to a wagon weighbridge (16).

6. A system according to claim 5, **characterized in that** the track maintenance machine (1) comprises a satellite frame that can be moved on rail running gears (2), **in that** this can be moved with respect to the machine frame (4) in the direction that the track (3) runs, and **in that** at least one work unit (5, 6) is arranged on the satellite frame.

7. A system according to claim 5 or 6, **characterized in that** the at least one force introduction point (12) for calibrating the wagon weighbridge (16) is designed as a bore, lashing eye, screw connection, or as a mechanically and functionally comparable introduction point or connection point for tensile and compressive forces.

8. A system according to one of the claims 5 to 7, **characterized in that** the at least one force introduction point (12) is set up on a lifting/lining unit (7).

9. A system according to one of the claims 5 to 8, **characterized in that** the at least one force introduction point (12) is set up on a ballast distribution device.

10. A system according to one of the claims 5 to 9, **characterized in that** the measuring unit (15) is designed as load cell.

11. A system according to one of the claims 5 to 10, **characterized in that** the measuring unit (15) is designed in duplicate and one measuring unit (15) is assigned to each of the two lines of rails (10).

12. A system according to one of the claims 5 to 11, **characterized in that** the measuring unit (15) comprises a compressive force transducer or a combined tensile/compressive force transducer.

13. A system according to one of the claims 5 to 12, **characterized in that** the measuring unit (15) is coupled with the control and regulation system (13) and/or with the sensor/measuring system (14), and **in that** the control and regulation system (13) is set up for analysing and storing the displacement and force signal of the force introduction point (12).

## Revendications

1. Procédé d'étalonnage d'un appareil de pesage du matériel roulant (16) au moyen d'une machine de pose de voie (1) pouvant être déplacée sur une voie ferrée (3), qui comprend des modules de travail (5, 6) pour l'usinage de la voie ferrée (3) et/ou d'un lit de ballast (9), dans lequel au moins un module de travail (5, 6) présente au moins un emplacement d'introduction de force (12) pouvant être abaissé et pouvant être soulevé par un entraînement (7), dans lequel l'entraînement (7) et ainsi le mouvement de l'emplacement d'introduction de force (12) s'effectue de manière régulée en termes de force ou de course au moyen d'un système de commande et de régulation installé (13), dans lequel
avant le début d'un processus d'étalonnage, la machine de pose de voie (1) est positionnée sur la voie ferrée (3) de sorte que l'au moins un emplacement d'introduction de force (12) adopte une position perpendiculaire sur la région de l'appareil de pesage du matériel roulant (16) à étalonner, dans lequel
une unité de mesure (15) est montée sur au moins l'emplacement d'introduction de force en question (12), dans lequel
l'unité de mesure (15) est couplée à l'appareil de pesage du matériel roulant (16) au niveau d'une pièce de voie/d'un point d'appui appartenant à l'appareil de pesage du matériel roulant (16), dans lequel
au moins l'emplacement d'introduction de force en question (12) est abaissé au début du processus d'étalonnage et une force définie est appliquée sur l'appareil de pesage du matériel roulant (16) par cet abaissement.

2. Procédé selon la revendication 1, **caractérisé en ce que** l'abaissement de l'emplacement d'introduction de force (12) et ce faisant l'augmentation de la force sur l'appareil de pesage du matériel roulant (16) s'effectue progressivement ou en continu.

3. Procédé selon la revendication 1 ou 2, **caractérisé en ce qu'**aussi bien l'abaissement de l'emplacement d'introduction de force (12) que la force sur l'appareil de pesage du matériel roulant (16) sont détectés par un système de capteur/mesure (14) en tant que signal de course et de force et transmis au système de commande et de régulation (13), que ce signal de course et de force est évalué pour la commande, régulation et surveillance du processus d'étalonnage, que le résultat de cette évaluation est comparé à des valeurs de début, fin et/ou limites enregistrées dans le système de commande et de régulation (13) ou entrées avant le début du processus d'étalonnage par un opérateur de machine, et que ce signal de course et de force ou des valeurs de données associées sont entrées en mémoire dans une mémoire, notamment une base de données.

4. Procédé selon une des revendications 1 à 3, **caractérisé en ce que** le signal de course et de force est affiché dans un dispositif d'affichage sous forme textuelle ou de manière préparée graphiquement en tant que graphe, et que le dispositif d'affichage est disposé dans une cabine d'opérateur (19).

5. Système de réalisation d'un procédé selon une des revendications 1 à 4, comprenant une machine de pose de voie (1) avec un châssis de machine (4) pouvant être déplacé sur des mécanismes de roulement ferroviaires (2) et avec au moins un module de travail (5, 6) monté sur le châssis de machine (4), dans lequel au moins un emplacement d'introduction de force (12) pouvant être abaissé et pouvant être soulevé par un entraînement (7) est installé sur au moins un module de travail (5, 6), dans lequel un entraînement (7) et ainsi le mouvement de l'au moins un emplacement d'introduction de force (12) peut être régulé en termes de force ou de course au moyen d'un système de commande et de régulation installé (13), comprenant en outre un système de capteur/mesure (14), ainsi qu'une cabine d'opérateur (17), dans lequel une unité de mesure (15) peut être montée sur au moins un emplacement d'introduction de force (12), dans lequel l'unité de mesure (15) peut être couplée à un appareil de pesage du matériel roulant (16) au niveau d'une pièce de voie/d'un point d'appui pouvant respectivement être associé(e) à un appareil de pesage du matériel roulant (16).

6. Système selon la revendication 5, **caractérisé en ce que** la machine de pose de voie (1) comprend un châssis satellite pouvant être déplacé sur des mécanismes de roulement ferroviaires (2), que celui-ci peut être déplacé par rapport au châssis de machine (4) dans le sens de tracé de la voie ferrée (3) et qu'au moins un module de travail (5, 6) est disposé sur le châssis satellite.

7. Système selon la revendication 5 ou 6, **caractérisé en ce que** l'au moins un emplacement d'introduction de force (12) est réalisé pour l'étalonnage de l'appareil de pesage du matériel roulant (16) en tant que perçage, œillet d'amarrage ou raccord de vis, ou par rapport à ces éléments cités en tant qu'emplacement d'introduction ou point de raccord comparable du point de vue mécanique et fonctionnel pour des forces de traction et de pression.

8. Système selon une des revendications 5 à 7, **caractérisé en ce que** l'au moins un emplacement d'introduction de force (12) est installé sur un module de levage/alignement (7).

9. Système selon une des revendications 5 à 8, **caractérisé en ce que** l'au moins un emplacement d'introduction de force (12) est installé sur un dispositif de répartition de ballast.

10. Système selon une des revendications 5 à 9, **caractérisé en ce que** l'unité de mesure (15) est réalisée en tant que boîte dynamométrique.

11. Système selon une des revendications 5 à 10, **caractérisé en ce que** l'unité de mesure (15) est réalisée en double et une unité de mesure (15) est à chaque fois associée à une des deux files de rails (10).

12. Système selon une des revendications 5 à 11, **caractérisé en ce que** l'unité de mesure (15) comprend un enregistreur de force de pression ou un enregistreur de force de traction/pression combiné.

13. Système selon une des revendications 5 à 12, **caractérisé en ce que** l'unité de mesure (15) est couplée au système de commande et de régulation (13) et/ou au système de capteur/mesure (14), et que le système de commande et de régulation (13) est configuré pour l'évaluation et la mémorisation du signal de course et de force de l'emplacement d'introduction de force (12).
